# EUROPÄISCHE PATENTSCHRIFT

(11) **EP 2 484 945 B1**
(45) Veröffentlichungstag und Bekanntmachung des Hinweises auf die Patenterteilung: **30.10.2013**
(21) Anmeldenummer: 12000531.9
(22) Anmeldetag: 27.01.2012
(51) Int. Cl.: F16K 11/07

(54) **Hydraulisches Wegeventil mit Rasteinrichtung**
Hydraulic proportional valve with locking unit
Distributeur hydraulique doté d'un dispositif d'arrêt

(30) Priorität: 04.02.2011 DE 102011010279
(43) Veröffentlichungstag der Anmeldung: 08.08.2012
(73) Patentinhaber: Robert Bosch GmbH, 70442 Stuttgart (DE)
(72) Erfinder: Keyl, Christoph, 70499 Stuttgart (DE)
(74) Vertreter: Thürer, Andreas

(56) Entgegenhaltungen:
- DE-B- 1 198 156
- US-A- 2 658 410
- US-A- 4 936 346

## Beschreibung

Die Erfindung betrifft ein hydraulisches Wegeventil mit einer Rasteinrichtung für verschiedene Stellungen eines in einer Ventilbohrung des Wegeventils verschiebbaren Hauptsteuerschiebers.

Bei derartigen hydraulischen Wegeventilen ist es aus dem Stand der Technik bekannt, eine Neutralstartsicherung vorzusehen. Damit soll sicher gestellt werden, dass der Hauptsteuerschieber ohne Pumpendruck (insbesondere bei einer abgestellten Versorgungsmaschine) nicht in einer verrasteten Funktionsstellung ist, damit beim nächsten Aufbau von Pumpendruck (insbesondere bei wieder angestellter Versorgungsmaschine) keine unerwartete Funktion bzw. Bewegung eines vom Wegeventil gesteuerten hydraulischen Verbrauchers stattfindet.

Weiterhin ist es aus dem Stand der Technik bekannt, bei derartigen hydraulischen Wegeventilen eine Kickout-Einrichtung vorzusehen, über die der Hauptsteuerschieber bei Überschreiten eines Pumpendrucks aus einer verrasteten Funktionsstellung gelöst wird. Dies kann z.B. bei beim Erreichen eines Anschlags eines vom Wegeventil versorgten Zylinders nötig sein.

Die Druckschrift DE 10 2008 022 509 A1 zeigt ein Wegeventil mit einer Rasteinrichtung für den Hauptsteuerschieber. Die jeweilige Verrastung wird durch einen Stift erzeugt, der von einer Rastfeder vorgespannt ist. Der Stift taucht radial von außen in verschieden Nuten des Hauptsteuerschiebers ein. Dabei sind eine Neutralstartsicherung und eine Kickout-Einrichtung vorgesehen. Nachteilig an der gezeigten Rasteinrichtung ist, dass der Stift einseitig in die Nuten des Hauptsteuerschiebers eingreift und somit eine Querkraft auf diesen ausübt.

Die Druckschriften DE 39 23 743 A1 und EP 0 394 860 A1 zeigen ebenfalls jeweils ein Wegeventil mit einer Rasteinrichtung für den Hauptsteuerschieber mit einer Neutralstartsicherung und einer Kickout-Einrichtung. Dabei wirkt keine Querkraft auf den jeweiligen Hauptsteuerschieber, da zu seiner Verrastung gleichmäßig an seinem Umfang verteilte Kugeln vorgesehen sind. Diese werden von einem kegelförmigen Körper radial nach außen in entsprechende Nuten gedrängt.

Bei der DE 39 23 743 A1 muss zum Entrasten über die Kickout-Einrichtung Druck in einem Druckraum im Innern des Hauptventilschiebers aufgebaut werden. Damit werden die Kugeln gegen die Kraft einer Rastfeder über den bzw. vom kegelförmigen Körper entlastet und somit die Verrastung aufgehoben.

Bei der EP 0 394 860 A1 wird zum Entrasten über die Neutralstartsicherung und über die Kickout-Einrichtung ein Rastraum entlastet, wodurch eine als Druckfeder ausgebildete Rastfeder entlastet wird. Dazu ist ein Kolben zwischen dem Rastraum und der Rastfeder vorgesehen. Nachdem der Kolben und das daran anliegende Ende der Rastfeder einen ausreichend langen entlastenden Federweg in Richtung zum Rastraum zurückgelegt haben, wird der kegelförmigen Körper von einer weiteren Feder in einer Entrastungsrichtung verschoben. Somit wird die Verrastung aufgehoben.

Nachteilig an dem letztgenannten hydraulischen Wegeventil mit Rasteinrichtung ist, dass einerseits der Hub, der zur Entlastung der Rastfeder nötig ist, und andererseits die räumliche Aneinanderreihung von Rastraum, Kolben, Feder, kegelförmigem Körper und weiterer Feder zu einem erheblichen Platzbedarf im Innern des Hauptsteuerschiebers führen.

Dem gegenüber liegt der Erfindung die Aufgabe zu Grunde, ein hydraulisches Wegeventil mit Rasteinrichtung incl. Neutralstartsicherung und Kickout-Einrichtung zu schaffen, bei dem der Platzbedarf für die Rasteinrichtung im Innern des Hauptsteuerschiebers minimiert ist.

Diese Aufgabe wird gelöst durch ein hydraulisches Wegeventil mit Rasteinrichtung mit den Merkmalen des Patentanspruchs 1.

Das erfindungsgemäße hydraulische Wegeventil hat eine Rasteinrichtung, über die ein Hauptsteuerschieber in verschiedenen Funktionsstellungen haltbar ist. Das Wegeventil hat eine Neutralstartsicherung, über die die Rasteinrichtung bei Unterschreitung eines ersten vorbestimmten Lastdrucks, der an einem Pumpenanschluss des Wegeventils anliegt, deaktivierbar ist. Das Wegeventil hat weiterhin eine Kickout-Einrichtung, über die die Rasteinrichtung bei Überschreitung eines zweiten vorbestimmten Lastdrucks am Pumpenanschluss deaktivierbar ist. Im Innern des Hauptsteuerschiebers sind ein der Neutralstartsicherung und der Kickout-Einrichtung zugeordneter Rastraum und eine Rastfeder angeordnet, wobei die Rastfeder und ein Druck im Rastraum im Sinne einer möglichen Aktivierung der Rasteinrichtung wirken. Da die Rastfeder im Rastraum angeordnet ist, ist der Platzbedarf der Rasteinrichtung im Innern des Hauptsteuerschiebers minimiert.

Weitere vorteilhafte Ausgestaltungen der Erfindung sind in den abhängigen Patentansprüchen beschrieben.

Be einer bevorzugten Weiterbildung des erfindungsgemäßen Wegeventils ist im Rastraum auch ein Rastkolben angeordnet, der von der Kraft der Rastfeder in Aktivierungsrichtung beaufschlagt ist. Am Außenumfang eines kegelförmigen Abschnitts des Rastkolbens sind Rastkugeln angeordnet, die vom kegelförmigen Abschnitt radial nach außen in Umfangsnuten einer Ventilbohrung des Wegeventils gedrängt werden können. Der Hauptsteuerschieber ist in der Ventilbohrung beweglich geführt. Damit ist der vorrichtungstechnische Aufwand für die Rasteinrichtung minimiert.

Vorzugsweise ist der Rastraum in allen Betriebszuständen des erfindungsgemäßen Wegeventils mit dem Lastdruck beaufschlagt. Dies kann über einen mit dem Pumpenanschluss verbundenen Kanal und über einen den Hauptsteuerschieber umgebenden Druckraum und über zwischen den Rastkugeln gebildete Freiräume des Hauptsteuerschiebers erfolgen. Alternativ oder in Ergänzung zu den zwischen den Rastkugeln gebildeten Freiräumen kann eine Radialbohrung im Hauptsteuerschieber vorgesehen sein, die den Druckraum mit dem Rastraum verbindet.

Bei einer besonders bevorzugten Weiterbildung des erfindungemäßen Wegeventils ist benachbart zum Rastkolben im Innern des Hauptsteuerschiebers ein Entrastkolben angeordnet, über den der Rastraum begrenzt ist, und der in einer der Aktivierungsrichtung entgegen gesetzten Deaktivierungsrichtung von der Kraft einer Neutralstartfeder beaufschlagt ist. Der Entrastkolben und der Rastkolben sind zwei getrennte Teile. Bei Unterschreiten des ersten Lastdrucks am Pumpenanschluss und damit im Rastraum kann die Neutralstartfeder über den Entrastkolben die Rasteinrichtung deaktivieren.

Dabei kann ein im Innern des Hauptsteuerschiebers gebildeter Neutralstartfederraum, in dem die Neutralstartfeder aufgenommen ist, und der über den Entrastkolben gegen den Rastraum abgegrenzt und abgedichtet ist, als Steuerdruckraum verwendet werden.

Die Kickout-Einrichtung ist vorzugsweise derart ausgebildet, dass der Neutralstartfederraum über einen Verbindungskanal mit dem Rastraum verbindbar ist, wobei in dem Verbindungskanal ein als Druckschaltventil ausgebildetes beim zweiten Lastdruck öffnendes Kickout-Ventil angeordnet ist. Ein zwischen dem Rastraum und dem Kickout-Ventil angeordneter Abschnitt des Verbindungskanals ist über eine Blende mit dem Lastdruck beaufschlagt. Somit kann die Kickout-Funktion bzw. die Deaktivierung der Verrastung dadurch erfolgen, dass der Rasttraum über das geöffnete Kickout-Ventil mit dem Neutralstartfederraum verbunden wird und damit vom Lastdruck entlastet wird.

Bei einer bevorzugten Weiterbildung des Kickout-Ventils hat dieses einen Schließkolben, der von einer Kickout-Feder in Schließrichtung vorgespannt ist, deren Vorspannung - insbesondere durch eine Hülse mit Außengewinde - einstellbar ist. Damit kann der zweite Lastdruck, bei dessen Überschreiten die Verrastung deaktiviert werden soll, einfach gewählt und justiert werden.

Das Öffnungsverhalten des Kickout-Ventils ist verbessert, wenn dieses eine Kugel hat, die von der Kickout-Feder über den Schließkolben gegen einen Ventilsitz des Kickout-Ventils vorgespannt ist, wobei eine Querschnittsfläche des Ventilsitzes kleiner ist als eine Querschnittsfläche des Schließkolbens.

Es wird bevorzugt, wenn ein Ausgang des Kickout-Ventils mit einem den Hauptsteuerschieber umgebenden Druckraum verbunden ist, dessen axiale Erstreckung entlang dem Hauptsteuerschieber mindestens einem maximalen Verschiebeweg des Hauptsteuerschiebers in der Ventilbohrung entspricht. Dabei ist der Druckraum über eine Radialbohrung des Hauptsteuerschiebers mit dem Neutralstartfederraum verbunden.

Bei einer bevorzugten Weiterbildung sind der Hauptsteuerschieber und der Rastraum und die Rastfeder und der Rastkolben mit dem kegelförmigen Abschnitt und der Entrastkolben und der Neutralstartfederraum und die Neutralstartfeder und ein aus den Rastkugeln gebildeter Ring und ein den Neutralstartfederraum begrenzender Stopfen im Wesentlichen koaxial zueinander.

Bei einer bevorzugten Auslegung der Federn ist die Kraft der Kickout-Feder höher als die Kraft der Neutralstartfeder, und/oder die Kraft der Neutralstartfeder ist höher als die Kraft der Rastfeder.

Dabei kann die einstellbare Kraft der Kickout-Feder 150 bis 210 bar, die Kraft der Neutralstartfeder 15 bar und die Kraft der Rastfeder 5 bar entsprechen.

Im Folgenden wird anhand einer Figur ein Ausführungsbeispiel der Erfindung detailliert beschrieben.

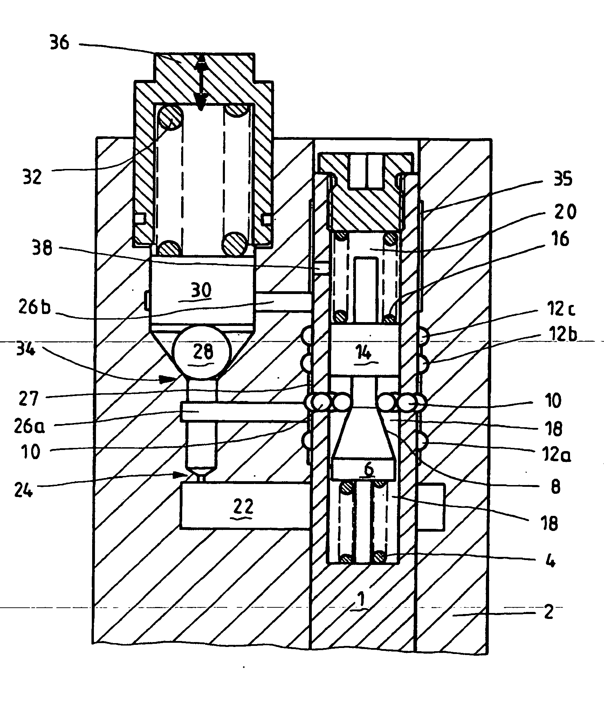

Die Figur zeigt ein Ausführungsbeispiel einer erfindungsgemäßen hydraulischen Wegeventils im schematischen seitlichen Schnitt. Das Wegeventil hat ein Gehäuse 2, in dessen Ventilbohrung ein Hauptsteuerschieber 1 verschiebbar ist. Der Hauptsteuerschieber 1 wird durch eine (nicht dargestellte) Federanordnung in einer (in der Figur gezeigten) Neutralstellung zentriert im Gehäuse 2 vorgespannt. Um einen Ölstrom vom und zum (nicht dargestellten) Verbraucher ein zu stellen, wird der Hauptsteuerschieber 1 mechanisch über einen (nicht gezeigten) Hebel aus dieser Neutralstellung verschoben. Dabei sind bei diesem Ausführungsbeispiel drei weitere Funktionsstellungen möglich: Auslenkung (in der Figur) nach unten für Heben, (in der Figur) nach oben für Senken und weiter nach oben für Freigang. Die drei Funktionsstellungen sind durch drei Umfangsnuten 12a, 12b, 12c am Innenumfang der Ventilbohrung veranschaulicht. Zwischen diesen Funktionsstellungen sind Zwischenstellungen für die feinfühlige Steuerung des Ölstroms über (nicht dargestellte) Steuerkanten und Ölkanäle möglich. Die Federzentrierung schiebt beim Loslassen des Hebels den Hauptsteuerschieber 1 in seine Neutralstellung zurück, damit stoppt eine (nicht gezeigte) Last.

Im Hauptsteuerschieber 1 ist ein Sackloch (in der Figur) von oben eingebracht. Darin liegt eine Rastfeder 4, deren Kraft 5 bar auf den Bohrungsdurchmesser entspricht. Ein Rastkolben 6 mit einem kegelförmigen Abschnitt 8 überträgt die Kraft der Rastfeder 4 in Aktivierungsrichtung (in der Figur) von unten nach oben wirkende Kraft auf Rastkugeln 10. Sie sind gleichmäßig am Umfang des Rastkolbens 6 und des Hauptsteuerschiebers 1 angeordnet. Durch den kegelförmigen Abschnitt 8 erfahren die Rastkugeln 10 eine radiale Kraft nach außen. Erreicht der Hauptsteuerschieber 1 eine der Funktionsstellungen, bewegen sich die Rastkugeln 10 in die entsprechende Umfangsnut 12a, 12b, 12c der Ventilbohrung und halten den Hauptsteuerschieber 1 in der entsprechenden Funktionsstellung fest. Überwindet der Bediener die so erzeugte Rastkraft über den Hebel, kann er den Hauptsteuerschieber 1 wieder aus der gerasteten Funktionsstellung bewegen.

In der Figur ist die Rasteinrichtung deaktiviert dargestellt. Dabei wird der Rastkolben 6 durch einen Entrastkolben 14, der in Deaktivierungsrichtung (in der Figur von oben nach unten) mit einer 15-bar-Neutralstartfeder 16 belastet ist, zurückgehalten. Die Rastkugeln 10 erfahren die Kraft nicht und es gibt keine Rastwirkung. Der Entrastkolben 14 unterteilt die Sacklochbohrung in einen Rastraum 18 und in einen Neutralstartfederraum 20. Der Neutralstartfederraum 20 ist mit Tank verbunden. In ihm herrscht also immer Tankdruck. Wird ein Pumpendruckraum 22 mit Lastdruck beaufschlagt (Neutralstartdruck), pflanzt sich dieser über eine Blende 24 und über einen Abschnitt 26a eines Verbindungskanals 26a, 26b und über eine Druckraum 27 und über Freiräume zwischen den Rastkugeln 10 in den Rastraum 18 fort. Der Durchmesser des Rastkolbens 6 ist etwas kleiner als der Durchmesser des Sacklochs im Hauptsteuerschieber 1, so dass im gesamten Rastraum 18 immer der gleiche Druck herrscht und am Rastkolben 6 keine resultierende Druckkraft angreift. Erreicht der Druck im Rastraum 18 den Neutralstartdruck bzw. den ersten Lastdruck (15 bar der Neutralstartfeder- 5 bar der Rastfeder = 10 bar), wird der Entrastkolben 14 etwas in Aktivierungsrichtung bewegt. Überschreitet er 10 bar, wird der Entrastkolben 14 bis zu seinem Anschlag in Aktivierungsrichtung bewegt. Dabei wird die 5-bar-Rastfeder 4 teilweise entspannt und die Verrastung wirksam. Damit ist einerseits sichergestellt, dass bei abgestellter Maschine bzw. Versorgungspumpe, währenddessen kein Druck im Rastraum 18 ansteht, keine Verrastung wirkt und der Hauptsteuerschieber 1 in Neutralstellung steht, so dass beim Einschalten keine hydraulische Funktion unerwartet startet. Andererseits ist gewährleistet, dass bei arbeitender Pumpe, eine Verrastung möglich ist, weil im Rastraum ein Druck ansteht, der den Entrastkolben 14 gegen die Kraft der Neutralstartfeder 16 vom Rastkolben 6 weg bis zu einem Anschlag zu bewegen vermag.

Der Rastraum 18 bzw. der Abschnitt 26a des Verbindungskanals 26a, 26b wird im Gehäuse 2 durch eine Kugel 28 abgedichtet, die über einen Schließkolben 30, auf den die Kickout-Feder 32 wirkt, auf ihren Ventilsitz 34 gedrückt wird. Die Kraft der Kickout-Feder 32 entspricht je nach Einstellung 150 - 210 bar auf den Durchmesser des Ventilsitzes 34. Erreicht der Pumpen- bzw. Lastdruck und mit ihm der Druck im Rastraum 18 den Wert der Kickout-Feder 32 bzw. den zweiten Lastdruck, hebt die Kugel 28 von ihrem Ventilsitz 34 ab, der Druck pflanzt sich fort und wirkt auf den Durchmesser des Schließkolbens 30. Er ist so gewählt, dass ein Druck von deutlich kleiner 10 bar genügt, um die Kraft der Kickout-Feder 32 in allen Einstellpositionen zu überwinden. Der Schließkolben 30 bewegt sich bis zum Anschlag (in der Figur) nach oben und öffnet eine Verbindung über den Verbindungskanal 26a, 26b und über einen Druckraum 35 und über eine Radialbohrung 38 zum Neutralstartfederraum 20. Der Zuflussquerschnitt über die Blende 24 zwischen Pumpendruckraum 22 und Rastraum 18 ist deutlich kleiner, als der vom Schließkolben 30 geöffnete Verbindungskanal 26a, 26b zum Tank, so dass im Rastraum 18 der (ursprüngliche zweite) Lastdruck zusammenbricht. Der Druck sinkt auf den Wert ab, der der Kraft der Kickout-Feder 32 auf die Querschnittsfläche des Schließkolbens 30 entspricht. Damit überwiegt die Kraft der 15-bar-Neutralstartfeder 16 der Druckkraft im Rastraum 18 plus der 5-bar-Rastfeder 4 und der Rastkolben 6 wird in Deaktivierungsrichtung (in der Figur) nach unten bewegt. Die Rastwirkung ist aufgehoben und der Hauptsteuerschieber 1 wird durch seine (nicht dargestellte) Federanordnung in die in der Figur gezeigte Neutralstellung zurück bewegt.

Damit ist sichergestellt, dass bei überschreiten des eingestellten Kickout-Drucks bzw. zweiten Lastdrucks (z.B. beim Erreichen des Zylinderanschlags) der Hauptsteuerschieber 1 in seine (in der Figur gezeigte) Neutralstellung zurückspringt, und der Pumpendruck auf das Niveau des Neutralumlaufs zurückgeht.

Der Kickout-Druck bzw. der zweiten Lastdruck ist mit einfachen Mitteln von außen über eine Hülse 36 einstellbar.

Beim gezeigten Ausführungsbeispiel ist keine zusätzliche Abdichtung von einem Hochdruckraum nach außen erforderlich, da die komplette Rastanordnung im Öl liegt. Es müssen lediglich am Hauptsteuerschieber 1 und an der Hülse 36 Räume, die Tankdruck führen nach außen abgedichtet werden.

Die Verrastung ist unabhängig vom Federpaket des Hauptsteuerschiebers 1, das Federpaket und die Anlenkung können auf beliebigen Seiten des Hauptsteuerschiebers 1 angeordnet werden (Rechts- oder Linksausführung).

Je nach Konstruktion können auch mehr als eine Rastkugel 10 in radialer Richtung erforderlich sein, um alle Wandstärken des Hauptsteuerschiebers 1 bzw. des Rastraums 18 zu überbrücken.

Offenbart ist ein hydraulisches Wegeventil mit einer Rasteinrichtung, über die ein Hauptsteuerschieber in verschiedenen Funktionsstellungen haltbar ist. Das Wegeventil hat eine Neutralstartsicherung, über die die Rasteinrichtung bei Unterschreitung eines ersten vorbestimmten Lastdrucks an einem Pumpenanschluss deaktivierbar ist, und eine Kickout-Einrichtung, über die die Rasteinrichtung bei Überschreitung eines zweiten vorbestimmten Lastdrucks am Pumpenanschluss deaktivierbar ist. Im Innern des Hauptsteuerschiebers ist ein der Neutralstartsicherung und der Kickout-Einrichtung zugeordneter - vorzugsweise stets mit Lastdruck beaufschlagter - Rastraum vorhanden, dessen Druckbeaufschlagung im Sinne einer möglichen Aktivierung der Rasteinrichtung wirkt. Erfindungsgemäß ist eine im Sinne einer Aktivierung der Rasteinrichtung wirkende Rastfeder im Rastraum angeordnet ist.

## Patentansprüche

1. Hydraulisches Wegeventil mit einer Rasteinrichtung (8, 10, 12a, 12b, 12c), über die ein Hauptsteuerschieber (1) in verschiedenen Funktionsstellungen haltbar ist, und mit einer Neutralstartsicherung, über die die Rasteinrichtung (8, 10, 12a, 12b, 12c) bei Unterschreitung eines ersten vorbestimmten Lastdrucks an einem Pumpenanschluss deaktivierbar ist, und mit einer Kickout-Einrichtung, über die die Rasteinrichtung (8, 10, 12a, 12b, 12c) bei Überschreitung eines zweiten vorbestimmten Lastdrucks am Pumpenanschluss deaktivierbar ist, wobei im Innern des Hauptsteuerschiebers (1) Rastraum (18) vorhanden ist, dessen Druckbeaufschlagung im Sinne einer möglichen Aktivierung der Rasteinrichtung (8, 10, 12a, 12b, 12c) wirkt, und eine im Sinne einer Aktivierung der Rasteinrichtung (8, 10, 12a, 12b, 12c) wirkende Rastfeder (4) angeordnet ist, **dadurch gekennzeichnet, dass** die Rastfeder (4) im Rastraum (18) angeordnet ist.

2. Wegeventil nach Anspruch 1, wobei im Rastraum (18) ein Rastkolben (6) angeordnet ist, der von der Kraft der Rastfeder (4) in Aktivierungsrichtung beaufschlagt ist, und an dessen Außenumfang Rastkugeln (10) angeordnet sind, die von einem kegelförmigen Abschnitt (8) des Rastkolbens (6) nach außen in Umfangsnuten (12a, 12b, 12c) einer Ventilbohrung drängbar sind, in der der Hauptsteuerschieber (1) bewegbar ist.

3. Wegeventil nach Anspruch 1 oder 2, wobei der Rastraum (18) stets mit Lastdruck beaufschlagt ist.

4. Wegeventil nach einem der vorhergehenden Ansprüche, wobei benachbart zum Rastkolben (6) ein Entrastkolben (14) angeordnet ist, über den der Rastraum (18) begrenzt ist, und der in einer der Aktivierungsrichtung entgegen gesetzten Deaktivierungsrichtung von der Kraft einer Neutralstartfeder (16) beaufschlagt ist.

5. Wegeventil nach Anspruch 4, wobei im Innern des Hauptsteuerschiebers (1) ein Neutralstartfederraum (20) gebildet ist, in dem die Neutralstartfeder (16) aufgenommen ist, und wobei der Rastraum (18) über den Entrastkolben (14) gegen den Neutralstartfederraum (20) abgegrenzt und abgedichtet ist.

6. Wegeventil nach Anspruch 5, wobei der Neutralstartfederraum (20) über einen Verbindungskanal (26a, 26b), in dem ein als Druckschaltventil ausgebildetes Kickout-Ventil (28, 30, 32, 34, 36) angeordnet ist, mit dem Rastraum (18) verbindbar ist, und wobei ein zwischen dem Rastraum (18) und dem Kickout-Ventil (28, 30, 32, 34, 36) angeordneter Abschnitt (26a) des Verbindungskanals (26a, 26b) über eine Blende (24) mit dem Lastdruck beaufschlagt ist.

7. Wegeventil nach Anspruch 6, wobei das Kickout-Ventil (28, 30, 32, 34, 36) einen Schließkolben (30) hat, der von einer Kickout-Feder (32) in Schließrichtung vorgespannt ist, wobei eine Vorspannung der Kickout-Feder (32) einstellbar ist.

8. Wegeventil nach Anspruch 7, wobei das Kickout-Ventil (28, 30, 32, 34, 36) eine Kugel (28) hat, die von der Kickout-Feder (32) über den Schließkolben (30) gegen einen Ventilsitz (34) vorgespannt ist, wobei eine Querschnittsfläche des Ventilsitzes (34) kleiner ist als eine Querschnittsfläche des Schließkolbens (30).

9. Wegeventil zumindest nach den Ansprüchen 5 und 6, wobei ein Ausgang des Kickout-Ventils (28, 30, 32, 34, 36) mit einem den Hauptsteuerschieber (1) umgebenden Druckraum (35) verbunden ist, dessen axiale Erstreckung entlang dem Hauptsteuerschieber (1) mindestens einem maximalen Verschiebeweg des Hauptsteuerschiebers (1) in der Ventilbohrung entspricht, und wobei der Druckraum (35) über eine Radialbohrung (38) des Hauptsteuerschiebers (1) mit dem Neutralstartfederraum (20) verbunden ist.

10. Wegeventil nach einem der Ansprüche 5 bis 9, wobei der Hauptsteuerschieber (1) und der Rastraum (18) und die Rastfeder (4) und der Rastkolben (6) mit dem kegelförmigen Abschnitt (8) und der Entrastkolben (14) und der Neutralstartfederraum (20) und die Neutralstartfeder (16) und ein aus den Rastkugeln (10) gebildeter Ring und ein den Neutralstartfederraum (20) begrenzender Stopfen im Wesentlichen koaxial zueinander sind.

11. Wegeventil nach einem der Ansprüche 7 bis 10, wobei die Kraft der Kickout-Feder (32) höher ist als die Kraft der Neutralstartfeder (16), oder wobei die Kraft der Neutralstartfeder (16) höher ist als die Kraft der Rastfeder (4).

## Claims

1. Hydraulic directional valve having a detent device (8, 10, 12a, 12b, 12c) by means of which a main control slide (1) can be held in different functional positions, and having a neutral start securing means by which the detent device (8, 10, 12a, 12b, 12c) can be deactivated if a predetermined load pressure at a pump port is undershot, and having a kickout device by means of which the detent device (8, 10, 12a, 12b, 12c) can be deactivated if a second predetermined load pressure at the pump port is exceeded, wherein, in the interior of the main control slide (1), there is provided a detent chamber (18), the pressurisation of which acts so as to effect a possible activation of the detent device (8, 10, 12a, 12b, 12c), and there is arranged a detent spring (4) which acts so as to effect an activation of the detent device (8, 10, 12a, 12b, 12c), **characterized in that** the detent spring (4) is arranged in the detent chamber (18).

2. Directional valve according to Claim 1, wherein, in the detent chamber (18), there is arranged a detent piston (6) which is loaded in an activation direction by the force of the detent spring (4) and on the outer circumference of which are arranged detent balls (10) which, by a conical portion (8) of the detent piston (6), can be forced outward into circumferential grooves (12a, 12b, 12c) of a valve bore in which the main control slide (1) is movable.

3. Directional valve according to Claim 1 or 2, wherein the detent chamber (18) is permanently charged with load pressure.

4. Directional valve according to one of the preceding claims, wherein, adjacent to the detent piston (6), there is arranged a detent release piston (14) which delimits the detent chamber (18) and which is loaded in a deactivation direction, which opposes the activation direction, by the force of a neutral start spring (16).

5. Directional valve according to Claim 4, wherein, in the interior of the main control slide (1), there is formed a neutral start spring chamber (20) in which the neutral start spring (16) is accommodated, and wherein the detent chamber (18) is delimited and sealed off with respect to the neutral start spring chamber (20) by means of the detent release piston (14).

6. Directional valve according to Claim 5, wherein the neutral start spring chamber (20) can be connected to the detent chamber (18) via a connecting duct (26a, 26b) in which there is arranged a kickout valve (28, 30, 32, 34, 36) in the form of a pressure switching valve, and wherein a portion (26a) of the connecting duct (26a, 26b) arranged between the detent chamber (18) and the kickout valve (28, 30, 32, 34, 36) is charged with the load pressure via an orifice (24).

7. Directional valve according to Claim 6, wherein the kickout valve (28, 30, 3234, 36) has a closing piston (30) which is preloaded in a closing direction by a kickout spring (32), wherein a preload of the kickout spring (32) is adjustable.

8. Directional valve according to Claim 7, wherein the kickout valve (28, 30, 32, 34, 36) has a ball (28) which is preloaded by the kickout spring (32) via the closing piston (30) against a valve seat (34), wherein a cross-sectional area of the valve seat (34) is smaller than a cross-sectional area of the closing piston (30).

9. Directional valve at least according to Claims 5 and 6, wherein an outlet of the kickout valve (28, 30, 32, 34, 36) is connected to a pressure chamber (35) which surrounds the main control slide (1) and the axial extent of which along the main control slide (1) corresponds at least to a maximum displacement travel of the main control slide (1) in the valve bore, and wherein the pressure chamber (35) is connected via a radial bore (38) of the main control slide (1) to the neutral start spring chamber (20).

10. Directional valve according to one of Claims 5 to 9, wherein the main control slide (1) and the detent chamber (18) and the detent spring (4) and the detent piston (6) with the conical portion (8) and the detent release piston (14) and the neutral start spring chamber (20) and the neutral start spring (16) and a ring formed from the detent balls (10) and a plug which delimits the neutral start spring chamber (20) are substantially coaxial with respect to one another.

11. Directional valve according to one of Claims 7 to 10, wherein the force of the kickout spring (32) is higher than the force of the neutral start spring (16), or wherein the force of the neutral start spring (16) is higher than the force of the detent spring (4).

## Revendications

1. Valve de distribution hydraulique comportant un dispositif de verrouillage (8,10,12a,12b,12b,12c), par l'intermédiaire duquel un tiroir de commande principal (1) peut être maintenu dans différentes positions fonctionnelles, et comportant une sécurité de démarrage au point mort, par l'intermédiaire de laquelle le dispositif de verrouillage (8,10,12a,12b,12c) peut être désactivé en cas de non-atteinte d'une première pression de charge prescrite sur un raccord de pompe, et comportant un dispositif de débrayage automatique, par l'intermédiaire duquel le dispositif de verrouillage (8,10,12a,12b,12c) peut être désactivé en cas de dépassement d'une deuxième pression de charge prescrite, dans laquelle à l'intérieur du tiroir de commande principal (1) un espace de verrouillage (18) est présent, dont la sollicitation par une pression agit dans le sens d'une activation possible du dispositif de verrouillage (8,10,12a,12b,12c) et un ressort de verrouillage (4) agissant dans le sens d'une activation du dispositif de verrouillage (8,10,12a,12b,12c), **caractérisé en ce que** le ressort de verrouillage (4) est disposé dans l'espace de verrouillage (18).

2. Valve de distribution selon la revendication 1, dans laquelle un piston de verrouillage (6) est disposé dans l'espace de verrouillage (18), lequel est sollicité par la force du ressort de verrouillage (4) dans la direction d'activation, et sur la circonférence extérieure duquel des billes de verrouillage (10) sont disposées, qui peuvent être refoulées par une portion sphérique (8) du piston de verrouillage (6) vers l'extérieur dans les rainures circonférentielles (12a,12b,12c) d'un alésage de soupape, dans lequel le tiroir de commande principal (1) peut être déplacé.

3. Valve de distribution selon les revendications 1 ou 2, dans laquelle l'espace de verrouillage (18) est constamment sollicité par une pression de charge.

4. Valve de distribution selon une des revendications précédentes, dans laquelle un piston de déverrouillage (14) est disposé à proximité du piston de verrouillage (6), par l'intermédiaire duquel l'espace de verrouillage (18) est délimité, et qui est sollicité dans une direction de désactivation dirigée en sens contraire de la direction d'activation par la force d'un ressort de démarrage au point mort (16).

5. Valve de distribution selon la revendication 4, dans laquelle à l'intérieur du tiroir de commande principal (1) un espace de ressort de démarrage au point mort (20)est formé dans lequel le ressort de démarrage au point mort (16) est renfermé, et dans laquelle l'espace de verrouillage (18) est délimité et étanchéifié par l'intermédiaire du piston de déverrouillage (14) contre l'espace de ressort de démarrage au point mort (20).

6. Valve de distribution selon la revendication 5, dans laquelle l'espace de ressort de démarrage au point mort (20) peut être relié à l'espace de verrouillage (18) par l'intermédiaire d'un canal de liaison (26a,26b), dans lequel une soupape de débrayage automatique (28,30,32,34) conçue comme une soupape de commutation de pression est disposée, et dans laquelle une portion (26a) du canal de liaison (26a,26b) disposée entre l'espace de verrouillage (18) et la soupape de débrayage automatique (28,30,32,34,36) est sollicité avec une pression de charge par l'intermédiaire d'un diaphragme (24).

7. Valve de distribution selon la revendication 6, dans laquelle la soupape de débrayage automatique (28,30,32,34,36) possède un piston de fermeture (30), qui est précontraint par un ressort de débrayage automatique (32) dans une direction de fermeture, dans laquelle une précontrainte du ressort de débrayage automatique (32) peut être ajustée.

8. Valve de distribution selon la revendication 7, dans laquelle la soupape de débrayage automatique (28,30,32,34,36) possède une bille (28), qui est précontrainte par le ressort de débrayage automatique (32) par l'intermédiaire d'un piston de fermeture (30) contre un siège de soupape (34), dans laquelle une surface de section transversale du siège de soupape (34) est plus petite qu'une surface de section transversale du piston de fermeture (30).

9. Valve de distribution selon au moins les revendications 5 et 6, dans laquelle une sortie de la soupape de débrayage automatique (28,30,32,34,36) est reliée à un espace pressurisé (35) entourant le tiroir de commande principal (1), dont l'extension axiale le long du tiroir de commande principal (1) correspond au moins à un trajet de déplacement maximal du tiroir de commande principal (1) dans l'alésage de soupape, et dans laquelle l'espace pressurisé (35) est relié par l'intermédiaire d'un alésage radial (38) du tiroir de commande principal (1) à l'espace de ressort de démarrage au point mort.

10. Valve de distribution selon une des revendications 5 à 9, dans laquelle le tiroir de commande principal (1) et l'espace de verrouillage (18) et le ressort de verrouillage (4) et le piston de verrouillage (6) avec la portion sphérique (8) et le piston de déverrouillage (14) et l'espace de ressort de démarrage au point mort (20) et le ressort de démarrage au point mort (16) et une bague formée par les billes de verrouillage (10) et un bouchon délimitant l'espace de ressort de démarrage au point mort (20) sont essentiellement coaxiaux les uns par rapport aux autres.

11. Valve de distribution selon une des revendications 7 à 10, dans laquelle la force du ressort de débrayage automatique (32) est plus haute que la force du ressort de démarrage au point mort (16), ou dans laquelle la force du ressort de démarrage au point mort (16) est plus haute que la force du ressort de verrouillage (4).
